# EUROPEAN PATENT SPECIFICATION

(11) **EP 3 165 381 B1**
(45) Date of publication and mention of the grant of the patent: **12.09.2018**
(21) Application number: 15814760.3
(22) Date of filing: 19.06.2015
(51) Int. Cl.: B60C 15/06, B60C 9/08, B60C 15/00, B60C 3/04, B60C 9/02

(54) **TIRE**
REIFEN
PNEUMATIQUE

(30) Priority: 03.07.2014 JP 2014137599
(43) Date of publication of application: 10.05.2017
(73) Proprietor: Bridgestone Corporation, Tokyo 104-8340 (JP)
(72) Inventor: TANIGUCHI, Hisashi, Tokyo 104-8340 (JP)
(74) Representative: Oxley, Robin John George
(86) International application number: PCT/JP2015/067719
(87) International publication number: WO 2016/002538

(56) References cited:
- EP-A1- 2 127 912
- EP-A1- 2 628 612
- WO-A1-2010/057523
- WO-A1-2015/008752
- JP-A- 2001 001 716
- JP-A- 2007 290 421
- JP-A- 2009 166 819
- JP-A- 2010 247 705
- JP-A- 2013 023 122
- JP-A- 2013 116 702

## Description

### Technical Field

The present invention relates to a tire in which a carcass ply is folded at a bead core.

### Background Art

A tire in which rigidity of a tire side part is enhanced and operation stability is improved is provided. In a tire disclosed in Patent Literature 1, the operation stability is improved by arranging a side reinforcing layer including a high rigidity reinforcing cord between (i) a carcass layer arranged so as to be extended between a left and right pair of bead cores and (ii) a side wall part. Attention is also drawn to the disclosures of WO 2015/008752 A1, EP 2628612 A1, JP 2001-001716 A, which shows a tire according to the preamble of claim 1, EP 2127912 A1 and WO 2010/057523 A1.

### Citation List

### Patent Literature

Patent Literature 1: JP 2013-35362 A

### Summary of Invention

### Technical Problem

However, as such a side reinforcing layer is arranged, weight of the tire is increased due to the reinforcing cord included in the side reinforcing layer, and therefore a rolling resistance is increased.

On the other hand, in recent years, it has been desired to decrease the rolling resistance of the tire. Especially, it is desired to decrease the rolling resistance of the tire while securing the operation stability in a high speed driving.

An object of the present invention is, in consideration of the problem described above, to provide a tire capable of decreasing a rolling resistance while securing operation stability.

### Solution to Problem

A tire according to a first aspect of the present invention includes a carcass ply forming a carcass layer so as to stride over a pair of bead cores, and a tread part arranged at an outer side of the carcass ply in a tire radial direction, the carcass ply including a body ply extended from the tread part to the bead core, and a folded ply folded around each of the bead cores. An end part of the folded ply is extended to a height position beyond a tire maximum width position. A bead filler height of a bead part is set within a range of 40% to 60% of a tire sectional height. A bead filler width at a height position corresponding to 30% of the tire sectional height is set within a range of 10% to 30% of a bead filler root part width. A tread width is set in a range of 81% or more of a tire maximum width. In a tire widthwise cross section, a curvature radius of the carcass ply on an extension line passing the tire maximum width position and extending in a tread width direction is set to be 30 mm or more.

### ADVANTAGEOUS EFFECTS OF INVENTION

The present invention is provides a tire capable of decreasing a rolling resistance while securing operation stability.

### Brief Description of Drawings

Fig. 1 is a cross-sectional view in a tire width direction illustrating a configuration of a tire according to one embodiment of the present invention.
Fig. 2 is a schematic view of the tire illustrating a direction of a cord of a carcass ply when seen in a tread plane view according to one embodiment of the present invention.
Fig. 3 is a diagram illustrating tire conditions and evaluation results in an experimental example.

### Description of Embodiments

Hereinafter, embodiments of the present invention are described with reference to drawings by using a pneumatic tire for a vehicle as an example of a tire. In the description below, the same or a similar numeral reference is appropriately assigned to the same or a similar part, and the detailed description thereof is therefore omitted.

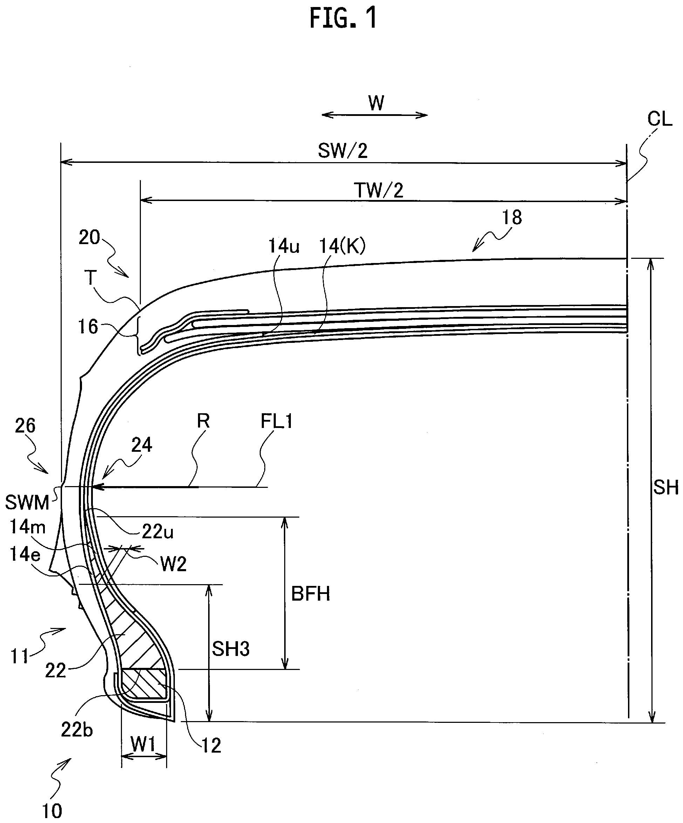

Fig. 1 is a cross-sectional view in a tire width direction illustrating a configuration of the pneumatic tire according to one example (hereinafter, referred to as "present embodiment") of the present invention. Here, a section in the tire width direction in the present description denotes a section along a tread width direction W and orthogonal to a tire circumferential direction.

The pneumatic tire 10 according to the present embodiment has a carcass ply 14 which forms a carcass layer K arranges so as to stride over a pair of bead cores 12, a belt layer 16 arranged at an outer side of the carcass ply 14 in a tire radial direction, and a tread part 18 arranged at an outer side of the belt layer 16 in the tire radial direction. The carcass ply 14 has a body ply 14m extended from the tread part 18 toward the bead core 12, and a folded ply 14e folded around each of the bead cores 12. An end part 14u of the folded ply 14e is extended toward a height position beyond a tire maximum width position SWM. Here, a height of the tire maximum width position SWM is substantially 50% of a tire sectional height SH.

A bead filler height BFH of a bead part 11 is set within a range of 40% to 60% of the tire sectional height SH. Further, a bead filler width W2 at a height position SH3 which corresponds to 30% of the tire sectional height SH is set within a range of 10% to 30% of a bead filler root part width W1. Accordingly, the bead filler 22 is formed as a so-called slim high bead filler. Further, in the present description, the bead filler height BFH denotes a height in the tire radial direction between a bead filler root part 22b adjacent to an outer side of the bead core 12 in the tire radial direction and a bead filler distal part 22u.

Further, a tread width TW is set in a range of 81% or more (preferably 83% or more) of a tire maximum width SW. The body ply 14m has a curvature radius R of 30 mm or more on an extension line FL1 passing the tire maximum width position SWM and extending in the tread width direction W in the tire width section. Accordingly, the pneumatic tire 10 is formed as a tire in which a radius of the carcass ply 14 of the tire side part 24 is relatively large. In the present embodiment, the curvature radius R of the body ply 14m at the tire maximum width position SWM is larger than a curvature radius of a shoulder part and smaller than a curvature radius of a crown part (tread part).

Further, in the present embodiment, the tread width TW as a length of the tread part 18 in the tread width direction is set to be 95% or less of the tire maximum width SW. Here, the tread width TW corresponds to a distance in the tread width direction W between tread end parts T arranged at both sides with respect to a tire equatorial line CL in a normal internal pressure and no load state. The tread end part T corresponds to a point in which a tangent on a tire outer peripheral surface of a corner part 20 at a side of the tread part 18 and a tangent on a tire outer peripheral surface of the corner part 20 at a side of the side wall part 26 are intersected with each other in the corner part 20 of the tire outer peripheral surface between the tread part 18 and a side wall part 26 in a section in the tire width direction.

Further, the tire maximum width SW corresponds to a maximum width of the pneumatic tire 10 in the normal internal pressure and no load state, namely the maximum width in an outline of a side outer peripheral excluding a rim guard and projection letters.

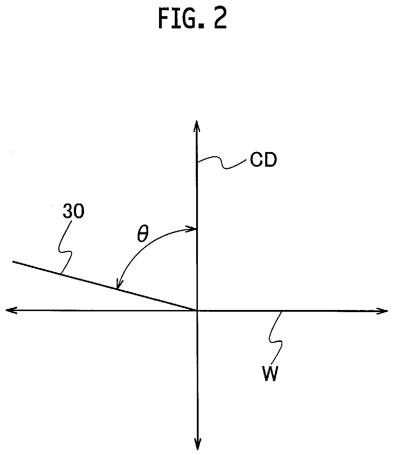

Further, in the present embodiment, the carcass layer K is formed by a single layer of a carcass ply 14 provided with a plurality of cords 30 inclined against a tire circumferential direction CD. Further, an inclined angle θ (see Fig. 2) between the cord 30 and tire circumferential direction CD is set within a range of 70 degrees to 90 degrees.

Further, the end part 14u of the folded ply 14e is extended to a part between the body ply 14m and the belt layer 16 arranged at the outer side of the body ply 14m in the tire radial direction. Namely, a part of the belt layer 16 is overlapped with a part of the folded ply.

### Functions and Effects

Hereinafter, functions and effects of the present embodiment are described. In the present embodiment, the end part 14u of the folded ply 14e is extended to the height position beyond the tire maximum width position SWM. Further, the bead filler height BFH of the bead part 11 is set in the range between 40 and 60% of the tire sectional height SH, and the bead filler width W2 at the height position SH3 which corresponds to 30% of the tire sectional height SH is set within the range of 10% to 30% of the bead filler root part width W1. Further, the tread width TW is set in the range of 81% or more of the tire maximum width SW, and the curvature radius R of the carcass ply 14 at the tire maximum width position SWM in the section in the tire width direction is 30 mm or more.

With such a configuration, the pneumatic tire 10 can secure the rigidity of the tire side part sufficiently without arranging a reinforcing rubber layer or a reinforcing cord in the tire side part 24. Namely, sufficient operation stability can be secured and the rolling resistance can be largely decreased because the weight of the tire is largely reduced.

Especially, this effect is contributed by a configuration in which the rigidity is enhanced by the bead filler 22 elongated in the section in the tire width direction. In the present embodiment, a thickness of the bead filler 22 is decreased asymptotically toward an outer side in the tire radial direction, and an upper end side (outer end side in the tire radial direction) of the bead filler 22 is formed as a thin plate part. This construction is manufactured by combining a conventional triangle bead filler and a rubber squeegee. As a kind of rubber, a hard rubber which is the same hardness as the conventional bead filler is utilized (here, the hard rubber is harder than rubber adjacent to a part around a side rubber).

Further, the bead filler height BFH is set in the range between 40 and 60% of the tire sectional height SH. If the bead filler height BFH is less than 20% of the tire sectional height SH, the operation stability cannot be sufficiently obtained, and if the bead filler height BFH is more than 60% of the tire sectional height SH, the rolling resistance becomes excessively high.

Further, the bead filler width W2 at the height position SH3 which corresponds to 30% of the tire sectional height SH is set within the range of 10% to 30% of the bead filler root part width W1, and decreasing of the rolling resistance is largely contributed by a configuration in which the bead filler width W2 at this position is sufficiently thin.

If the bead filler width W2 at this position is thicker than a thickness of 40% of the bead filler root part width W1, the rolling resistance (decreasing degree of rolling resistance) is deteriorated because of increasing of weight or the like. Further, a region adjacent to the bead filler 22 is hardly deformed and a deformed region is limited, and therefore a heating value becomes larger, so that the rolling resistance is deteriorated. Further, it is difficult to form the curvature radius R of the body ply 14m of the tire side part 24 30 mm or more.

Further, since the tread width TW is 81% or more of the tire maximum width SW, wear resistance can be secured. If a ratio of the tread width TW against the tire maximum width SW is less than 81%, the wear resistance of the tread part 5 might be deteriorated.

Further, when lateral force is generated during a high speed turn or the like, especially deformation due to strain is generated in the side wall part 26. At this time, since the curvature radius R (hereinafter, referred to as "side curvature radius" as needed) of the carcass ply 14 on the extension line FL1 passing the tire maximum width position SWM and extending in the tread width direction W is 30 mm or more, the deformation can be received by the whole part of the side wall part 26. Thus, a configuration of the carcass ply 14 suppresses the local deformation of the side wall part 26 and suppresses the deterioration of the rolling resistance or the operation stability. If the side curvature radius R is less than 30 mm, it is impossible to enhance tension force in the cord forming the carcass layer K, and therefore the local deformation might be generated in the side wall part 26. When such a local deformation is generated in the side wall part 26, strain is concentrated on the deformation part, and the deterioration of the rolling resistance or the operation stability might be invited.

Further, in the present embodiment, the tread width TW is 95% or less of the tire maximum width SW. If the tread width TW is larger than this, deformation is apt to be concentrated on the shoulder corner part, namely strain is apt to be concentrated on the shoulder corner part, and heating value becomes larger, and therefore the rolling resistance might be deteriorated. However, in the present embodiment, since the tread width TW is set in the range between 81 and 95% of the tire maximum width SW, the curvature radius R of the body ply 14m of the tire side part 24 is easily set to be larger such as 30 mm or more.

Further, the carcass layer K is formed of a single layer of the carcass ply 14 provided with a plurality of the cords 30 inclined against the tire circumferential direction CD, and the inclined angle θ between the cord 30 and the tire circumferential direction CD is set in the range between 70 degrees and 90 degrees. With this, the rigidity of the carcass ply 14 is enhanced, and the operation stability is further improved.

Further, a so-called envelop structure in which the end part 14u of the folded ply 14e is extended to a part between the body ply 14m and the belt layer arranged at the outer side of the body ply 14m in the tire radial direction is adopted. In this way, by arranging the end part 14u of the folded ply 14e to overlap with the belt layer 6, the rigidity of the side wall part 26 and the carcass layer K is enhanced, and the operation stability can be further improved.

Further, in a case in which the curvature radius R of the carcass ply 14 at the tire maximum width position SWM in the section in the tire width direction is 60 mm or less, a concern about the deterioration of the rolling resistance when the strain is concentrated on the shoulder corner part because the curvature radius R is excessively large and the heating value becomes large disappears sufficiently. In a case in which the curvature radius R is 50 mm or less, the concern disappears completely.

Further, it is preferable that the bead filler height BFH is set to be a height beyond the tire maximum width position SWM from a viewpoint of enhancing rigidity during a turn. However, taking an influence to the rolling resistance into consideration, it is preferable that the bead filler width beyond a position of 40% of the tire sectional height SH is set to be 10% or less of the bead filler root part width W1. Further, from a viewpoint of securing the minimum rigidity, it is preferable that the bead filler width at a height position which corresponds to 20% of the tire sectional height SH is set to be 80% or more of the bead filler root part width W1.

Further, it is further preferable that the bead filler width W2 at the height position SH3 which corresponds to 30% of the tire sectional height SH is set within a range of 10% to 30% of the bead filler root part width W1. In a case in which the bead filler width W2 is set to be 10% or more of the bead filler root part width W1, the operation stability can be secured, and in a case in which the bead filler width W2 is set to be 30% or less of the bead filler root part width W1, the rolling resistance can be sufficiently decreased.

Further, in a case in which the bead filler height BFH is set in the range between 40 and 60% of the tire sectional height SH, the highly operation stability can be shown, and since antinomy against the rolling resistance is less, the best balanced performance can be secured.

Further, in a case in which a part having the curvature radius R of the body ply 14m of 30 mm or more is spread in a region of ±5% of the tire sectional height SH with respect to the tire maximum width position SWM, more preferably a region of ±10% of the tire sectional height SH with respect to the tire maximum width position SWM, the further sufficient operation stability can be secured.

Further, in the present embodiment, the inclined angle θ (see Fig. 2) between the cord 30 and the tire circumferential direction CD is set in the range between 70 degrees and 90 degrees as an example, however an angle between the cord 30 and the tire circumferential direction CD is not limited to 70 degrees or more in the present invention, and the angle between the cord 30 and the tire circumferential direction CD may be 0 degree as in a pneumatic radial tire.

Further, a configuration in which a tread pattern has a plurality of circumferential direction grooves (main grooves), and the tread pattern further has a lug groove (lateral groove) at a shoulder land part located at an outer side in the tread width direction of a shoulder circumferential direction groove (shoulder main groove) as the most outer side groove among the circumferential direction grooves, and the lug groove is not opened to the shoulder main groove and the lug groove is extended toward the outer side in the tread width direction beyond a ground contact end may be adopted. Here, the ground contact end denotes a ground contact part at the most outer side in the tire width direction when the pneumatic tire is mounted to a normal rim with normal internal pressure and a normal load applied to the pneumatic tire. The "normal rim" denotes a standard rim defined in the following standard in accordance with a size of a tire, the "normal internal pressure" denotes air pressure corresponding to the maximum load capacity of a single tire in an applied size described in the following standard, and the "normal load" denotes the maximum load of a single tire in an applied size described in the following standard. Further, the standard is defined in accordance with an industrial standard effective in a region where the tire is manufactured or used. For example, the standard is defined in "JATMA YEAR BOOK" of "Japan Automobile Tyre Manufacturers Association" in Japan, in "YEAR BOOK" of "THE TIRE AND RIM ASSOCIATION INC." in the U.S., or "STANDARD MANUAL" of "The European Tyre and Rim Technical Organisation" in the Europe.

Especially, as the tread width TW becomes larger, difference in radiuses at a center side and at an end side in the tire becomes larger, and therefore in a region near an outer side end in a tread width TW direction, wear of the shoulder due to a slip is easily occurred. Thus, by arranging the lug groove in the shoulder land part, the rigidity of the tire is decreased and a length of a ground contact part is lengthened, and by adopting a configuration in which the lug groove is not opened to the circumferential direction groove, the difference in the radiuses at a part adjacent to an end part of the tire is suppressed to be excessively small, and eccentric wear can be prevented. Further, with a configuration in which the lug groove is not arranged in a center region between the shoulder circumferential direction grooves, the difference in the radiuses at the part adjacent to the end part of the tire is further suppressed to be excessively small, and the eccentric wear can be prevented.

Here, since the influence described above is less applied to a sipe having a lug groove width of 1 mm or less, the sipe may be arranged in the land part at the center region.

As described above, the several embodiments are described as examples.

### Experimental Examples

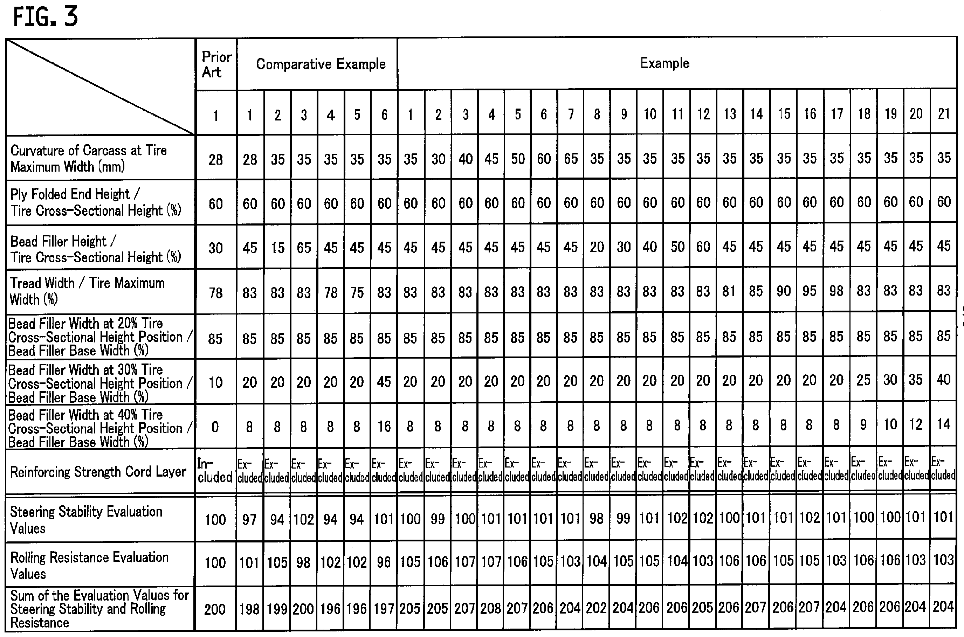

The present inventor conducted evaluation of the operation stability and the rolling resistance during driving by using examples 1 to 21 as the pneumatic tire 10 according to the embodiment described above, comparative examples 1 to 6 as the pneumatic tire for comparison, and a conventional example 1 as one example of the conventional pneumatic tire. A tire condition and an evaluation result of each tire are shown in Fig. 3. A size of the tire is 225/45 R17, and the rim width is 8J.

The tire is mounted to a vehicle (BMW 325i) and a test run is carried out, and the operation stability is evaluated by feeling of a test driver. The tire is mounted to a rim and the internal pressure is set to be 240 kPa and then they are mounted to a rolling resistance test drum, and the rolling resistance is evaluated by measuring a value of the rolling resistance in the normal load at a predetermined test speed (80 km / h). In these evaluations, an evaluation value of the tire according to the conventional example 1 is defined as 100, and relative evaluation values of other tires against the tire of the conventional example 1 are acquired. Each performance of the operation stability and the rolling resistance is better as the evaluation value becomes larger. Namely, the rolling resistance is low as the evaluation value is large. Further, an overall evaluation is defined by a total value of the evaluation values of the operation stability and the rolling resistance. As shown in Fig. 3, each value of the overall evaluation of the examples 1 to 21 is larger than that of the conventional example 1.

Further, in the comparative example 1, the weight is lightened because the reinforcing cord is not arranged, however it is assumed that since the curvature radius (side curvature radius) of the carcass at the tire maximum width position is small, the heating value becomes large due to the deformation of the tire side part and therefore the rolling resistance is not largely improved.

In the comparative example 2, the length of the bead filler in the tire radial direction is short, however it is assumed that since the deformation of the tire side part becomes large due to decreasing of the rigidity of a part adjacent to the bead, the rolling resistance is not largely improved.

A possibility is assumed from the example 7 that the deformation is concentrated on other part of the tire (for example, the shoulder part), in a case in which the side curvature radius R is excessively large.

In the comparative example 4, it is assumed that since the deformation of a part near the shoulder part becomes large because the tread width TW is narrow even though the side curvature radius R is large, the heating value becomes large and the rolling resistance is totally worse.

A possibility is assumed from the example 17 that the heating value becomes large when a shape of the shoulder corner part is close to a perpendicular shape and the deformation in the perpendicular shape part is occurred locally.

### Industrial Applicability

The present invention is provides a tire capable of decreasing a rolling resistance while securing operation stability.

### Reference Signs List

- 10: PNEUMATIC TIRE
- 12: BEAD CORE
- K: CARCASS LAYER
- 14: CARCASS PLY
- 16: BELT LAYER
- 18: TREAD PART
- 14m: BODY PLY
- 14e: FOLDED PLY
- 14u: END PART
- 30: CORD
- BFH: BEAD FILLER HEIGHT
- SH3: HEIGHT POSITION
- SWM: TIRE MAXIMUM WIDTH POSITION
- SH: TIRE SECTIONAL HEIGHT
- W1: BEAD FILLER ROOT PART WIDTH
- W2: BEAD FILLER WIDTH
- R: CURVATURE RADIUS
- TW: TREAD WIDTH
- SW: TIRE MAXIMUM WIDTH
- θ: INCLINED ANGLE
- W: TREAD WIDTH DIRECTION
- CD: TIRE CIRCUMFERENTIAL DIRECTION

## Claims

1. A tire (10) comprising:
a carcass ply (14) forming a carcass layer (K) so as to stride over a pair of bead cores (12); and
a tread part (18) arranged at an outer side of the carcass ply (14) in a tire radial direction, the carcass ply (14) including a body ply (14m) extended from the tread part (18) to the bead core (12), and a folded ply (14e) folded around each of the bead cores (12), wherein:
an end part (14u) of the folded ply (14e) is extended to a height position beyond a tire maximum width position (SWM); and
a tread width (TW) is set in a range of 81% or more of a tire maximum width (SW), wherein a bead filler height (BFH) of a bead part (11) is set within a range of 40% to 60% of a tire sectional height (SH); and
in a tire widthwise cross section, a curvature radius (R) of the carcass ply (14) on an extension line (FL1) passing the tire maximum width position (SWM) and extending in a tread width direction (W) is set to be 30 mm or more, **characterized in that** a bead filler width (W2) at a height position (SH3) corresponding to 30% of the tire sectional height (SH) is set within a range of 10% to 30% of a bead filler root part width (W1).

2. The tire (10) according to claim 1, wherein the tread width (TW) is set to be 95% or less of the tire maximum width (SW).

3. The tire (10) according to claim 1, wherein the carcass layer (K) is formed of a single layer of the carcass ply (14) provided with a plurality of cords (30) inclined against a tire circumferential direction (CD), and
an inclined angle (θ) between the plurality of cords (30) and the tire circumferential direction (CD) is set within a range of 70 degrees to 90 degrees.

4. The tire (10) according to claim 1, wherein the curvature radius (R) of the carcass ply (14) at the tire maximum width position (SWM) in the cross section in the direction of tire width is set to be 60 mm or less.

5. The tire (10) according to claim 4, wherein the curvature radius (R) is set to be 50 mm or less.

6. The tire (10) according to claim 1, wherein the end part (14u) of the folded ply (14e) is extended to a part between the body ply (14m) and a belt layer (16) arranged at an outer side of the body ply (14m) in the tire radial direction.

## Patentansprüche

1. Reifen (10), der Folgendes umfasst:
eine Karkassenlage (14), die eine Karkassenschicht (K) bildet, so dass sie sich über ein Paar von Wulstkernen (12) erstreckt, und
einen Laufflächenteil (18), der an einer in einer Reifenradialrichtung äußeren Seite der Karkassenlage (14) angeordnet ist, wobei die Karkassenlage (14) eine Körperlage (14m), die vom Laufflächenteil (18) bis zum Wulstkern (12) ausgedehnt ist, und eine umgeschlagene Lage (14e), die um jeden der Wulstkerne (12) umgeschlagen ist, einschließt, wobei:
ein Endteil (14u) der umgeschlagenen Lage (14e) bis zu einer Höhenposition jenseits einer Position maximaler Reifenbreite (SWM) ausgedehnt ist und
eine Laufflächenbreite (TW) in einem Bereich von 81 % oder mehr einer maximalen Reifenbreite (SW) festgesetzt ist, wobei
eine Kernreiterhöhe (BFH) eines Wulstteils (11) innerhalb eines Bereichs von 40 % bis 60 % einer Reifenschnitthöhe (SH) festgesetzt ist, und,
in einem Reifenbreitenquerschnitt, ein Krümmungsradius (R) der Karkassenlage (14) auf einer Ausdehnungslinie (FL1), welche die Position maximaler Reifenbreite (SWM) passiert und sich in einer Laufflächen-Breitenrichtung (W) erstreckt, auf 30 mm oder mehr festgesetzt ist, **dadurch gekennzeichnet, dass** eine Kernreiterbreite (W2) an einer Höhenposition (SH3), die 30 % der Reifenschnitthöhe (SH) entspricht, innerhalb eines Bereichs von 10% bis 30 % einer Kernreiter-Wurzelteilbreite (W1) festgesetzt ist.

2. Reifen (10) nach Anspruch 1, wobei die Laufflächenbreite (TW) auf 95 % oder weniger der maximalen Reifenbreite (SW) festgesetzt ist.

3. Reifen (10) nach Anspruch 1, wobei die Karkassenschicht (K) aus einer einzigen Schicht der Karkassenlage (14) gebildet ist, die mit einer Vielzahl von Kords (30) versehen ist, die gegen eine Reifenumfangsrichtung (CD) geneigt sind, und
ein Neigungswinkel (θ) zwischen der Vielzahl von Kords (30) und der Reifenumfangsrichtung (CD) innerhalb eines Bereichs von 70 bis 90 Grad festgesetzt ist.

4. Reifen (10) nach Anspruch 1, wobei der Krümmungsradius (R) der Karkassenlage (14) an der Position maximaler Reifenbreite (SWM) im Querschnitt in der Richtung der Reifenbreite auf 60 mm oder weniger festgesetzt ist.

5. Reifen (10) nach Anspruch 4, wobei Krümmungsradius (R) auf 50 mm oder weniger festgesetzt ist.

6. Reifen (10) nach Anspruch 1, wobei der Endteil (14u) der umgeschlagenen Lage (14e) bis zu einem Teil zwischen der Körperlage (14m) und einer Gürtelschicht (16) ausgedehnt ist, die an einer in der Reifenradialrichtung äußeren Seite der Körperlage (14m) angeordnet ist.

## Revendications

1. Pneu (10) comprenant :
une nappe de carcasse (14) formant une couche de carcasse (K) de façon à passer au-dessus d'une paire de tringles de talon (12), et
une partie de bande de roulement (18) disposée à un côté extérieur de la nappe de carcasse (14) dans un sens radial du pneu, la nappe de carcasse (14) incluant une nappe de corps (14m) s'étendant depuis la partie de bande de roulement (18) jusqu'à la tringle de talon (12) et une nappe pliée (14e) pliée autour de chacune des tringles de talon (12), dans lequel :
une partie d'extrémité (14u) de la nappe pliée (14e) s'étend jusqu'à une position de hauteur au-delà d'une position de largeur maximale du pneu (SWM), et
la largeur de bande de roulement (TW) est réglée dans une gamme de 81 % ou plus d'une largeur maximale du pneu (SW), dans lequel
une hauteur d'élément de remplissage de talon (BFH) d'une partie de talon (11) est réglée dans une gamme de 40 à 60 % de la hauteur de section de pneu (SH), et
dans une section transversale en largeur du pneu, un rayon de courbure (R) de la nappe de carcasse (14) sur une ligne d'extension (FL1) passant par la position de largeur maximale du pneu (SWM) et s'étendant dans un sens de la largeur du pneu (W) est réglée pour être de 30 mm ou plus, **caractérisé en ce qu'**une largeur de l'élément de remplissage de talon (W2) à une position en hauteur (SH3) correspondant à 30 % de la hauteur de section du pneu (SH) est réglée dans une gamme de 10 % à 30 % d'une largeur de partie de base de l'élément de remplissage de talon (W1).

2. Pneu (10) selon la revendication 1, dans lequel la largeur de la bande de roulement (TW) est réglée pour être de 95 % ou moins de la largeur maximale du pneu (SW).

3. Pneu (10) selon la revendication 1, dans lequel la couche de carcasse (K) est formée d'une seule couche de la nappe de carcasse (14) pourvue d'une pluralité de câbles (30) inclinés par rapport à une direction circonférentielle du pneu (CD), et
un angle incliné (θ) entre la pluralité de câbles (30) et la direction circonférentielle du pneu (CD) est réglé pour être compris entre 70 et 90 degrés.

4. Pneu (10) selon la revendication, 1, dans lequel le rayon de courbure (R) de la nappe de carcasse (14) à la position de largeur maximale du pneu (SWM) dans la section transversale dans le sens de la largeur du pneu est réglé pour être inférieur ou égal à 60 mm.

5. Pneu (10) selon la revendication 4, dans lequel le rayon de courbure (R) est réglé pour être inférieur ou égal à 50 mm.

6. Pneu (10) selon la revendication 1, dans lequel la partie d'extrémité (14u) de la nappe pliée (14e) s'étend jusqu'à une partie entre la nappe de corps (14m) et une couche de ceinture (16) disposée à un côté extérieur de la nappe de corps (14m) dans le sens radial du pneu.
